# DEMANDE DE BREVET EUROPEEN

(11) **EP 4 650 208 A1**
(43) Date de publication de la demande: **19.11.2025**
(21) Numéro de dépôt: 25170223.9
(22) Date de dépôt: 11.04.2025
(51) Int. Cl.: B60K 35/22, B60K 35/23, B60K 35/28, B60K 35/29, B60K 35/81, B60R 1/26, G02B 27/01

(54) **GÉNÉRATION D'INSTRUCTIONS D'AFFICHAGE POUR LE CONTRÔLE DE LA DIFFUSION D'UN FLUX VIDÉO FOURNI PAR UNE CAMÉRA D'UN APPAREILLAGE D'AIDE AU STATIONNEMENT D'UN VÉHICULE AUTOMOBILE**

(30) Priorité: 17.05.2024 FR 2405089
(71) Demandeur: Stellantis Auto SAS, 78300 Poissy (FR); FCA US LLC, Auburn Hills, MI 48326-2766 (US)
(72) Inventeur: QUINIO, PIERRE, 78000 VERSAILLES (FR); GARDREL, JEROME, 91210 DRAVEIL (FR); MANSOUR, FATEN, 65428 Rüsselshiem am Main (DE); HARDING, JAMES, Grand Blanc, 48439 (US); BELLAVITA, FRANCESCA AURELIA, 10123 Torino (IT)
(74) Mandataire: ESIP

(57) **Abrégé**

L'invention porte sur un procédé de génération d'instructions d'affichage pour le contrôle de la diffusion d'un flux vidéo fourni par une caméra (3) d'un appareillage d'aide au stationnement d'un véhicule automobile (1) sur un écran (4) d'une interface homme-machine du véhicule, le véhicule comprenant un appareillage d'affichage tête haute (2). L'invention concerne également un dispositif informatique (100) mettant en œuvre un tel procédé, ainsi qu'un véhicule automobile (1) comprenant un tel dispositif (100).

## Description

### Domaine technique de l'invention

La présente invention concerne le domaine des appareillages d'aide au stationnement des véhicules automobiles. L'invention porte en particulier sur un procédé de de génération, par un dispositif informatique embarqué à bord d'un véhicule automobile, d'instructions d'affichage pour le contrôle de la diffusion d'un flux vidéo fourni par une caméra d'un appareillage d'aide au stationnement du véhicule sur un écran d'une interface homme-machine du véhicule, le véhicule comprenant un appareillage d'affichage tête haute. L'invention concerne également un dispositif mettant en œuvre un tel procédé, ainsi qu'un véhicule automobile comprenant un tel dispositif. L'invention s'applique aux véhicules automobiles tels que les véhicules terrestres à moteur, notamment les voitures.

### État de la technique antérieure

On sait que la plupart des véhicules automobiles permettent l'affichage d'informations sur un ou plusieurs écrans agencés dans l'habitacle. De tels écrans sont notamment utilisés pour diffuser un flux vidéo fourni par une caméra d'un appareillage d'aide au stationnement qui est embarqué à bord de certains véhicules. On sait aussi que certains véhicules automobiles modernes sont équipés d'un appareillage d'affichage tête haute qui permet de projeter des contenus visuels dans le champ de vision du conducteur lorsque celui-ci regarde la route. De tels contenus qui sont ainsi projetés renseignent notamment certaines informations qui permettent d'assurer la sécurité de la conduite. Or, lorsque l'appareillage d'affichage tête haute est inactif, ces contenus sont généralement transférés sur un écran agencé à proximité du poste de conduite afin que le conducteur puisse toujours être informé de manière complète. Cependant, lorsque le véhicule effectue une manœuvre en marche arrière, la surface de l'écran qui est disponible pour diffuser le flux vidéo fourni par la caméra de recul de l'appareillage d'aide au stationnement se trouve réduit du fait de la nécessité, lorsque l'appareillage d'affichage tête haute est inactif, d'afficher en même temps le contenu visuel qui n'est pas projeté dans le champ de vision du conducteur. Il en résulte que le flux vidéo de la caméra de recul se trouve au moins en partie rogné, ce qui a pour conséquence de diminuer l'ergonomie et d'augmenter le risque d'accident lors de la réalisation de la manœuvre.

### Résumé de l'invention

L'invention vise à remédier à cette problématique. Elle a en particulier pour but de procurer une solution pour que l'affichage d'un contenu visuel produit par un appareillage d'affichage tête haute sur un écran d'une interface homme-machine d'un véhicule automobile ne détériore pas la qualité de l'affichage d'un flux vidéo fourni par une caméra d'un appareillage d'aide au stationnement du véhicule qui est diffusé sur l'écran. Par ce biais, l'invention vise à permettre la fourniture de véhicules automobiles plus ergonomiques et plus sûrs.

Afin d'atteindre ces buts, l'invention concerne, selon un premier aspect, un procédé de génération, par un dispositif informatique embarqué à bord d'un véhicule automobile, d'instructions d'affichage pour le contrôle de la diffusion d'un flux vidéo fourni par une caméra d'un appareillage d'aide au stationnement du véhicule sur un écran d'une interface homme-machine du véhicule, le véhicule comprenant un appareillage d'affichage tête haute, le procédé comprenant les étapes de :
i) déterminer un état de fonctionnement courant de l'appareillage d'affichage tête haute ; et
ii) générer une première instruction d'affichage s'il est établi que l'appareillage d'affichage tête haute est inactif ou une deuxième instruction d'affichage s'il est établi que l'appareillage d'affichage tête haute est actif.

Selon une variante, la première instruction d'affichage peut comprendre au moins une première coordonnée cartésienne et/ou une première taille d'affichage.

Selon une autre variante, la deuxième instruction d'affichage peut comprendre au moins une deuxième coordonnée cartésienne et/ou une deuxième taille d'affichage.

Selon encore une autre variante, la première instruction d'affichage peut comprendre un identifiant d'un premier flux vidéo fourni par la caméra.

Selon encore une autre variante, la deuxième instruction d'affichage peut comprendre un identifiant d'un deuxième flux vidéo fourni par la caméra.

Selon un deuxième aspect, l'invention concerne un dispositif de génération d'instructions d'affichage pour le contrôle de la diffusion d'un flux vidéo fourni par une caméra d'un appareillage d'aide au stationnement d'un véhicule automobile sur un écran d'une interface homme-machine du véhicule, le véhicule comprenant un appareillage d'affichage tête haute, le dispositif comprenant au moins une unité de traitement d'informations, comprenant au moins un processeur, et un support de stockage de données configurés pour mettre en œuvre un procédé tel que décrit ci-dessus.

Selon un troisième aspect, l'invention concerne un programme d'ordinateur comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur sur lequel un programme tel que décrit ci-dessus est enregistré.

Selon un cinquième aspect, l'invention concerne un véhicule automobile comprenant un dispositif tel que décrit ci-dessus.

### Brève description des figures

D'autres caractéristiques et avantages de l'invention apparaîtront à l'examen de la description détaillée ci-après, et des figures annexées, dans lesquelles :
[Fig. 1] est un schéma d'un véhicule automobile selon l'invention ;
[Fig. 2] est un diagramme fonctionnel d'un dispositif selon l'invention ; et
[Fig. 3] est un logigramme des étapes d'un procédé selon l'invention.

### Description détaillée de l'invention

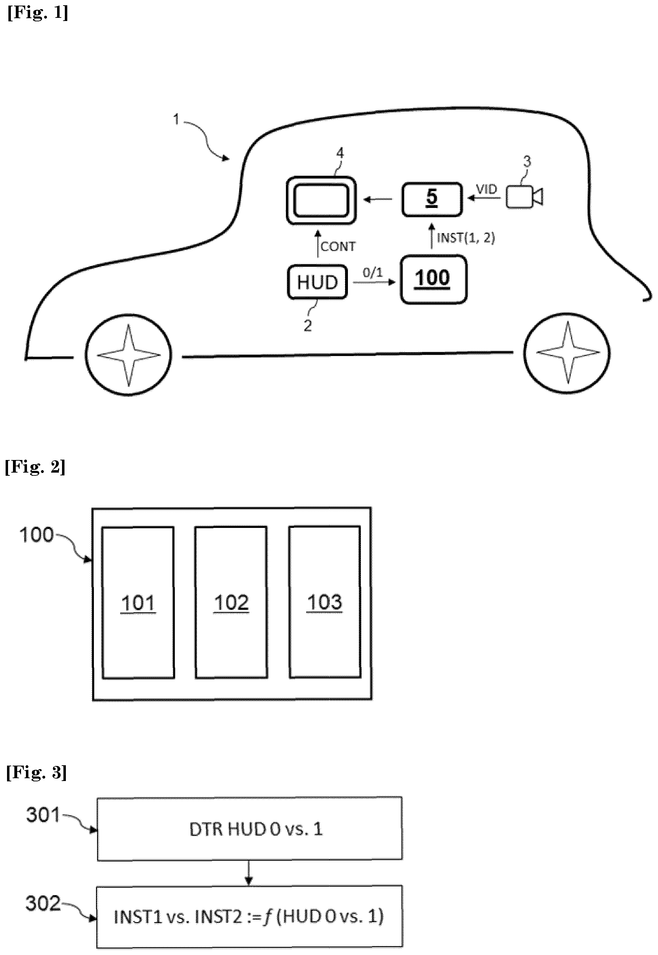

La figure 1 illustre schématiquement un véhicule automobile 1 selon l'invention. Celui-ci est équipé d'un appareillage d'affichage tête haute 2, qui permet classiquement l'affichage de contenus visuels au niveau du parebrise du véhicule positionnés de sorte à se trouver dans le champ de vision du conducteur lorsque celui-ci regarde la route devant le véhicule 1. Il comprend également un appareillage d'aide au stationnement, qui permet classiquement la diffusion d'un flux vidéo fourni par une caméra 3 embarquée à bord du véhicule sur un écran 4 agencé à proximité du poste de conduite. Pour ce faire, un module de gestion 5 fait ordinairement office de passerelle entre la caméra 4 et l'écran 3. De manière traditionnelle, le module de gestion 5 est configuré pour ajuster ou sélectionner un flux vidéo fourni par la caméra 3 en fonction de paramètres d'affichage qu'il héberge ou d'instructions d'affichage qui lui sont transmises, et ce afin qu'un tel flux soit correctement affiché sur l'écran 4 qui est installé dans le véhicule 1.

De manière avantageuse, le véhicule 1 selon l'invention embarque en outre un dispositif 100 de génération d'instructions d'affichage pour le contrôle de la diffusion d'un flux vidéo fourni par une caméra d'un appareillage d'aide au stationnement d'un véhicule automobile sur un écran d'une interface homme-machine du véhicule au sens de la présente invention, tel que décrit ci-après. Ce dispositif 100 selon l'invention met avantageusement en œuvre un procédé de génération d'instructions d'affichage pour le contrôle de la diffusion d'un flux vidéo fourni par une caméra d'un appareillage d'aide au stationnement d'un véhicule automobile sur un écran d'une interface homme-machine du véhicule au sens de la présente invention, tel que résumé brièvement ci-dessous et décrit en détail plus bas.

Lors de la mise en œuvre du procédé selon l'invention, le dispositif 100 selon l'invention établit dans un premier temps un mode de fonctionnement courant de l'appareillage d'affichage tête haute 2, autrement dit si, à l'instant courant, celui est actif ou inactif (i.e. éteint, défaillant, en cours d'activation, en cours de désactivation). Ensuite, il génère une première instruction d'affichage s'il établit que l'appareillage d'affichage tête haute 2 est inactif ou une deuxième instruction d'affichage s'il établit que l'appareillage d'affichage tête haute 2 est actif. Ainsi, s'il a établi que l'appareillage d'affichage tête haute 2 est inactif, ce qui signifie que le contenu visuel habituellement projeté devant le conducteur est transféré sur l'écran 4, la première instruction d'affichage comprend une première coordonnée cartésienne et/ou une première taille d'affichage sur laquelle le module de gestion 5 se base pour ajuster le flux vidéo fourni par la caméra 4 lorsque l'appareillage d'aide au stationnement est actif. Au contraire, si le dispositif 100 selon l'invention a établi que l'appareillage d'affichage tête haute 2 est actif, ce qui signifie qu'il projette son contenu visuel devant le conducteur, et de ce fait qu'aucune surface de l'écran 4 n'est utilisée pour afficher celui-ci, le dispositif 100 selon l'invention génère alors une deuxième instruction d'affichage qui comprend une deuxième coordonnée cartésienne et/ou une deuxième taille d'affichage que le module de gestion 5 utilise pour ajuster le flux fourni par la caméra lorsque l'appareillage d'aide au stationnement est actif. Alternativement, lorsque la caméra 4 est en mesure de fournir deux flux vidéo dimensionnés de manière différente, la première instruction d'affichage générée par le dispositif 100 selon l'invention comprend un identifiant d'un premier flux, tandis que la deuxième instruction d'affichage comprend un identifiant d'un deuxième flux, et le module de gestion 5 sélectionne un flux ou un autre en fonction d'un identifiant de flux qu'il reçoit du dispositif 100 selon l'invention. C'est de cette manière que le dispositif 100 selon l'invention assure qu'un flux vidéo fourni par la caméra n'est pas en partie rogné par un contenu visuel produit par l'appareillage d'affichage tête haute 2 lorsque l'appareillage d'aide au stationnement est actif, et qu'il contribue ainsi à la fourniture de véhicules automobiles plus ergonomiques et plus sûrs.

Sur la figure 2 est illustré schématiquement le dispositif 100 de génération d'instructions d'affichage pour le contrôle de la diffusion d'un flux vidéo fourni par une caméra d'un appareillage d'aide au stationnement d'un véhicule automobile sur un écran d'une interface homme-machine du véhicule au sens de la présente invention. Il s'agit essentiellement d'un appareil informatique, qui comprend au moins une unité de traitement d'informations 101, comportant un ou plusieurs processeurs, un support de stockage de données 102, sur lequel est notamment enregistré un programme qui comprend des instructions de code de programme pour l'exécution des étapes du procédé selon l'invention décrit ci-après, et une interface d'entrée et sortie 103 permettant la réception et l'émission de données.

Préférentiellement, le dispositif 100 selon l'invention est hébergé sur un calculateur indépendant et il interagit par le biais de son interface d'entrée et sortie 103 et au moyen d'un réseau de communication filaire du véhicule (e.g. CAN, Ethernet, MOST) - matérialisé sur la figure 1 par les flèches - avec l'appareillage d'affichage tête haute 2 et avec le module de gestion 5. De ce fait, le dispositif 100 selon l'invention peut, notamment, déterminer un état de fonctionnement courant de l'appareillage d'affichage tête haute 2, et il peut en conséquence générer une instruction d'affichage à destination du module de gestion 5.

Selon l'invention, tous les éléments décrits ci-dessus contribuent pour permettre la mise en œuvre d'un procédé de génération d'instructions d'affichage pour le contrôle de la diffusion d'un flux vidéo fourni par une caméra d'un appareillage d'aide au stationnement d'un véhicule automobile sur un écran d'une interface homme-machine du véhicule au sens de la présente invention, tel que décrit ci-dessous en lien avec la figure 3.

La figure 3 illustre au moyen d'un logigramme les étapes du procédé selon l'invention.

Selon une première étape 301 du procédé selon l'invention, le dispositif 100 selon l'invention détermine un état de fonctionnement courant de l'appareillage d'affichage tête haute 2. Il interagit pour ce faire avec l'appareillage d'affichage tête haute 2, qui l'informe sur simple requête ou de manière automatisée de son état de fonctionnement courant lorsqu'il est actif. Au contraire, le dispositif 100 selon l'invention détermine que l'appareillage d'affichage tête haute est inactif (i.e. éteint, défaillant, en cours d'activation, en cours de désactivation) lorsqu'il ne répond pas à une requête transmise ou s'il s'avère tout simplement indisponible. Ainsi, au terme de cette première étape du procédé, le dispositif 100 selon l'invention a avantageusement déterminé si l'appareillage d'affichage tête haute 2 est à l'instant courant inactif, ce qui signifie que le contenu visuel qu'il projette habituellement devant le conducteur au niveau du parebrise du véhicule 1 est transféré sur l'écran 4, ou s'il est actif, ce qui signifie qu'aucun contenu visuel produit par l'appareillage d'affichage tête haute n'occupe une partie de la surface d'affichage de l'écran 4.

Ensuite, selon une deuxième étape 302 du procédé selon l'invention, le dispositif 100 selon l'invention génère une première instruction d'affichage s'il a établi que l'appareillage d'affichage tête haute 2 est inactif ou une deuxième instruction d'affichage s'il a établi que l'appareillage d'affichage tête haute 2 est actif.

Selon une première variante, qui s'applique lorsque la caméra 3 de l'appareillage d'aide au stationnement génère un flux vidéo unique, la première instruction d'affichage qui est ainsi générée et transmise au module de gestion 5 comprend au moins une première coordonnée cartésienne et/ou une première taille d'affichage, tandis que la deuxième instruction d'affichage comprend au moins une deuxième coordonnée cartésienne et/ou une deuxième taille d'affichage. Ainsi, dans le premier cas, càd. lorsque l'appareillage d'affichage tête haute 2 est inactif, la première instruction d'affichage permet au module de gestion 5 de positionner le flux vidéo fourni par la caméra 3 sur l'écran 4 d'une première manière lorsque l'appareillage d'aide au stationnement du véhicule 1 est actif, càd. lorsque le véhicule effectue une manœuvre en marche arrière. Dans ce cas, un contenu visuel habituellement projeté par l'appareillage d'affichage tête haute 2 est en effet transféré sur l'écran 4, et la première instruction d'affichage, autrement dit la première coordonnée cartésienne et/ou la première taille d'affichage, permet au module de gestion 5 de positionner le flux vidéo fourni par la caméra 3 sur l'écran 4 de sorte que celui-ci n'est pas en partie rogné par le contenu visuel produit par l'appareillage d'affichage tête haute 2 qui est affiché sur l'écran 4 à cet instant. Au contraire, dans le deuxième cas, càd. lorsque l'appareillage d'affichage tête haute 2 est actif, la deuxième instruction d'affichage permet au module de gestion 5 de positionner le flux vidéo fourni par la caméra 3 sur l'écran 4 d'une deuxième manière lorsque l'appareillage d'aide au stationnement est actif, càd. lorsque le véhicule 1 effectue une manœuvre en marche arrière. Dans ce cas, l'appareillage d'affichage tête haute 2 projette en effet son contenu visuel de manière classique devant le conducteur et aucune portion de la surface d'affichage de l'écran 4 n'est à cet instant dévolue à l'affichage de ce contenu visuel. La deuxième instruction d'affichage, autrement dit la deuxième coordonnée cartésienne et/ou la deuxième taille d'affichage, permet au module de gestion 5 de positionner le flux vidéo fourni par la caméra 3 sur l'écran 4 de sorte qu'il occupe une partie plus importante de la surface d'affichage de l'écran 4.

Selon une deuxième variante, qui s'applique lorsque la caméra 3 de l'appareillage d'aide au stationnement est en mesure de générer deux flux vidéo dimensionnés de manière différente, la première instruction d'affichage qui est ainsi générée et transmise au module de gestion 5 comprend un identifiant d'un premier flux vidéo fourni par la caméra 3, tandis que la deuxième instruction d'affichage comprend un identifiant d'un deuxième flux vidéo fourni par la caméra 3. Ainsi, dans le premier cas, càd. lorsque l'appareillage d'affichage tête haute 2 est inactif, la première instruction d'affichage permet au module de gestion 5 de sélectionner un premier flux vidéo fourni par la caméra 4 lorsque l'appareillage d'aide au stationnement du véhicule 1 est actif, càd. lorsque le véhicule effectue une manœuvre en marche arrière. Dans ce cas, un contenu visuel habituellement projeté par l'appareillage d'affichage tête haute 2 est en effet transféré sur l'écran 4, et la première instruction d'affichage, autrement dit l'identifiant d'un premier flux vidéo fourni par la caméra 3, permet au module de gestion 5 de sélectionner un premier flux vidéo fourni par la caméra 3 sur l'écran 4 qui n'est pas en partie rogné par le contenu visuel produit par l'appareillage d'affichage tête haute 2 qui est affiché sur l'écran 4 à cet instant. Au contraire, dans le deuxième cas, càd. lorsque l'appareillage d'affichage tête haute 2 est actif, la deuxième instruction d'affichage permet au module de gestion 5 de sélectionner un deuxième flux vidéo fourni par la caméra 3 lorsque l'appareillage d'aide au stationnement est actif, càd. lorsque le véhicule 1 effectue une manœuvre en marche arrière. Dans ce cas, l'appareillage d'affichage tête haute 2 projette en effet son contenu visuel de manière classique devant le conducteur et aucune portion de la surface d'affichage de l'écran 4 n'est à cet instant dévolue à l'affichage de ce contenu visuel. La deuxième instruction d'affichage, autrement dit l'identifiant d'un deuxième flux fourni par la caméra 3, permet au module de gestion 5 de sélectionner le deuxième flux vidéo fourni par la caméra 3 qui occupe une partie plus importante de la surface d'affichage de l'écran 4.

Ainsi, grâce au procédé et au dispositif selon l'invention décrits ci-dessus, une solution existe pour que l'affichage d'un contenu visuel produit par un appareillage d'affichage tête haute sur un écran d'une interface homme-machine d'un véhicule automobile ne détériore pas la qualité de l'affichage d'un flux vidéo fourni par une caméra d'un appareillage d'aide au stationnement du véhicule. C'est ainsi que le procédé et le dispositif selon l'invention contribuent à la fourniture de véhicules automobiles plus ergonomiques et plus sûrs.

## Revendications

1. Procédé de génération, par un dispositif informatique (100) embarqué à bord d'un véhicule automobile (1), d'instructions d'affichage pour le contrôle de la diffusion d'un flux vidéo fourni par une caméra (3) d'un appareillage d'aide au stationnement du véhicule sur un écran (4) d'une interface homme-machine du véhicule, le véhicule comprenant un appareillage d'affichage tête haute (2), **caractérisé en ce que** le procédé comprend les étapes de :
i) déterminer un état de fonctionnement courant de l'appareillage d'affichage tête haute (2) ; et
ii) générer une première instruction d'affichage s'il est établi que l'appareillage d'affichage tête haute (2) est inactif ou une deuxième instruction d'affichage s'il est établi que l'appareillage d'affichage tête haute (2) est actif.

2. Procédé selon la revendication 1, **caractérisé en ce que** la première instruction d'affichage comprend au moins une première coordonnée cartésienne et/ou une première taille d'affichage.

3. Procédé selon l'une des revendications précédentes, **caractérisé en ce que** la deuxième instruction d'affichage comprend au moins une deuxième coordonnée cartésienne et/ou une deuxième taille d'affichage.

4. Procédé selon la revendication 1, **caractérisé en ce que** la première instruction d'affichage comprend un identifiant d'un premier flux vidéo fourni par la caméra (3).

5. Procédé selon la revendication 4, **caractérisé en ce que** la deuxième instruction d'affichage comprend un identifiant d'un deuxième flux vidéo fourni par la caméra (3).

6. Dispositif (100) de génération d'instructions d'affichage pour le contrôle de la diffusion d'un flux vidéo fourni par une caméra (3) d'un appareillage d'aide au stationnement d'un véhicule automobile (1) sur un écran (4) d'une interface homme-machine du véhicule (1), le véhicule comprenant un appareillage d'affichage tête haute (2), **caractérisé en ce que** le dispositif comprend au moins une unité de traitement d'informations (101), comprenant au moins un processeur, et un support de stockage de données (102) configurés pour mettre en œuvre un procédé selon l'une quelconque des revendications précédentes.

7. Programme d'ordinateur comprenant des instructions de code de programme pour l'exécution des étapes d'un procédé selon l'une quelconque des revendications 1 à 5 lorsque ledit programme est exécuté par au moins un processeur.

8. Support utilisable dans un ordinateur, **caractérisé en ce qu'**un programme selon la revendication 7 y est enregistré.

9. Véhicule automobile (1), **caractérisé en ce qu'**il comprend un dispositif (100) selon la revendication 6.
